# EUROPÄISCHE PATENTSCHRIFT

(11) **EP 1 553 686 B1**
(45) Veröffentlichungstag und Bekanntmachung des Hinweises auf die Patenterteilung: **20.11.2013**
(21) Anmeldenummer: 05405001.8
(22) Anmeldetag: 04.01.2005
(51) Int. Cl.: H02M 3/158

(54) **Hochspannungs-Gleichstromversorgung sowie Verfahren zum Betrieb einer solchen Hochspannungs-Gleichstromversorgung**
High voltage DC power supply and method of operating such high voltage DC power supply
Alimentation de courant continu à haute tension et méthode d'opération de telle alimentation de courant continu à haute tension

(30) Priorität: 06.01.2004 CH 82004
(43) Veröffentlichungstag der Anmeldung: 13.07.2005
(73) Patentinhaber: PL Technologies AG, 8834 Schindellegi (CH)
(72) Erfinder: Alex, Jürgen, 79777 Untermettingen (DE); Bader, Michael, 4800 Zofingen (CH)
(74) Vertreter: Dreiss

(56) Entgegenhaltungen:
- EP-A- 0 134 505
- WO-A-95/10881
- DE-A- 3 545 772

## Beschreibung

### TECHNISCHES GEBIET

Die vorliegende Erfindung bezieht sich auf das Gebiet Stromversorgungstechnik. Sie betrifft eine Hochspannungs-Gleichstromversorgung gemäss dem Oberbegriff des Anspruchs 1 sowie ein Verfahren zum Betrieb einer solchen Hochspannungs-Gleichstromversorgung.

### STAND DER TECHNIK

Bereits vor langer Zeit sind für amplitudenmodulierte Hochleistungs-Rundfunksender, die mit einer Elektronenröhre in der HF-Endstufe bestückt waren, Modulationsverstärker in Form sogenannter PSM(Pulse Step Modulation)-Verstärker entwickelt worden, die gleichzeitig die Anodenspannung für die Endröhre bereitstellen, und das NF-Signal verstärken und der Anodenspannung modulierend aufprägen (siehe z.B. die US-A-4,403,197). Das NF-Signal wird dabei durch eine Stufenfunktion approximiert, die sich aus dem Aufbau des PSM-Verstärkers ergibt. Der PSM-Verstärker besteht aus einer Mehrzahl von schaltbaren Gleichspannungsquellen (Modulen, Stufen), die zur Aufsummierung ihrer Ausgangsspannungen in Serie geschaltet sind. Die modularen Gleichspannungsquellen oder Schaltstufen können dabei binär gewichtet sein. Sie können aber auch in Aufbau und Auslegung gleich sein. Die erstgenannte Variante hat den Vorteil, dass mit vergleichsweise wenigen Modulen eine grosse Anzahl von Spannungsstufen erzeugt werden kann. Bei der Belastbarkeit der Module ergeben sich dagegen extreme Unterschiede. Die letztgenannte Variante hat den Vorteil, dass die einzelnen Module durch die Serienfertigung günstiger herzustellen sind, dass die einzelnen Module bei einer genügend feinen Unterteilung der Stufen relativ gering belastet sind, und dass beim Ausfall einiger Stufen andere Stufen deren Funktion übernehmen können, ohne dass es zu merklichen Einbussen in der Übertragungsqualität kommt (Redundanz).

Da die PSM-Verstärker bei geeigneter Auslegung der Module steuerbare Hochspannungs-Gleichstromquellen mit Ausgangsspannungen von mehreren 10 kV und Strömen von über 100 A darstellen, die aufgrund ihres modularen Aufbaus auch schnell abgeschaltet werden können, sind sie in der Vergangenheit auch als solche vorgeschlagen und eingesetzt worden: So ist es aus der EP-A1-0 134 505 bekannt, eine dem PSM-Verstärker vergleichbare Schaltung als Hochspannungs-Gleichstromversorgung mit Überstromschutz zu verwenden.

In der EP-A1-0 563 543 ist vorgeschlagen worden, eine modular aufgebaute Hochspannungs-Gleichstromversorgung zur Spannungsversorgung einer Gyrotronröhre in Plasmafusionsexperimenten einzusetzen, wobei unterschiedliche Spannungsniveaus durch Zwischenabgriffe in der Serieschaltung der Module bereitgestellt werden.

Ein spezieller konstruktiver Aufbau einer modularen Hochspannungs-Gleichstromversorgung mit mehr als 100 kV Ausgangsspannung ist in der EP-A1-0 905 872 beschrieben.

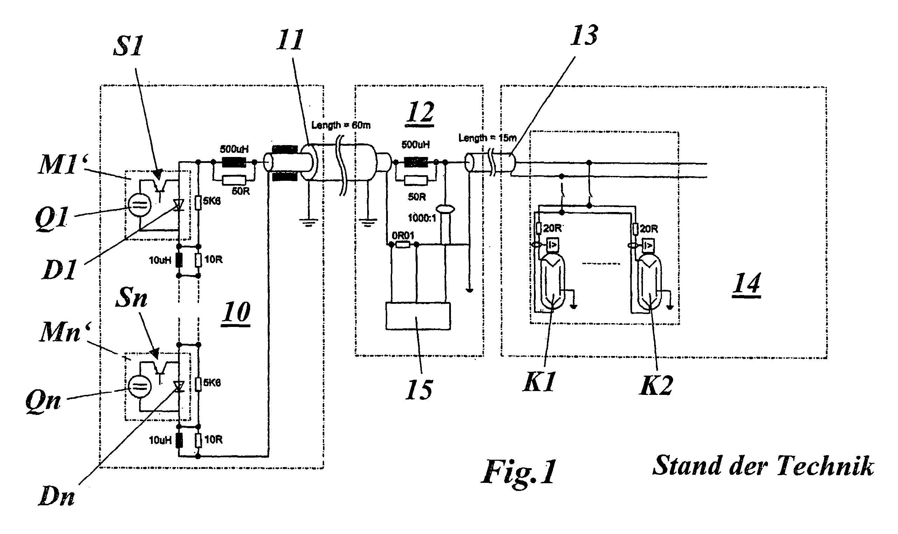

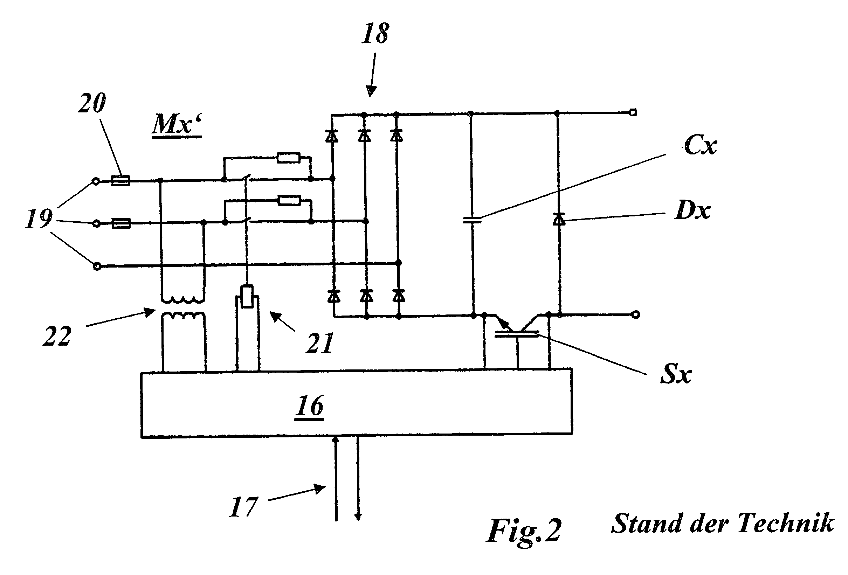

In jüngster Zeit ist vorgeschlagen worden (J. Alex et al., The High Voltage Power Supply for the Alcator C-MOD Lower Hybrid Heating System, 22nd Symposium on Fusion Technology, Helsinki, Sept. 9-13, 2002), eine in PSM-Technik aufgebaute Stromversorgung mit einer Ausgangsspannung von 50 kV bei Strömen von mehr als 200 A für die Versorgung von mehreren parallelgeschalteten Klystrons einzusetzen. Das vereinfachte Schaltbild der Gesamtanordnung der Klystron-Spannungsversorgung ist in Fig. 1 wiedergegeben. Der beispielhafte Aufbau eines einzelnen Moduls bzw. einer einzelnen Stufe ist in Fig. 2 dargestellt.

Die bekannte Hochspannungs-Gleichstromversorgung 10 aus Fig. 1 umfasst eine Vielzahl von Modulen M1' bis Mn' (im vorliegenden Fall ist n=68). Jedes der Module M1',..,Mn' enthält eine Gleichspannungsquelle Q1,..,Qn, die mittels eines Schalters (Halbleiterschalters) S1,..,Sn an die Ausgangsklemmen des jeweiligen Moduls gelegt werden kann. Zwischen den Ausgangsklemmen jedes Moduls liegt eine in Sperrrichtung gepolte Diode (Freilaufdiode) D1,..,Dn. Die Module M1',..,Mn' sind mit ihren Ausgangsklemmen über ein Netzwerk aus Induktivitäten und Widerständen derart in Serie geschaltet, dass sich die Ausgangsspannungen der einzelnen Module aufsummieren. Die aufsummierte Ausgangsspannung der Hochspannungs-Gleichstromversorgung 10 wird über ein erstes (triaxiales) Verbindungskabel 11, einen zwischengeschalteten Hochspannungsanschlusskasten 12 mit einer darin befindlichen Messvorrichtung 15, und ein zweites Verbindungskabel 13 auf die Last 14 gegeben, die eine Vielzahl von parallelgeschalteten Klystrons umfasst, von denen zwei (K1 und K2) in Fig. 1 dargestellt sind.

Als Schalter S1,..,Sn sind in den Modulen M1',..,Mn' Paare von zwei parallelgeschalteten IGBTs eingesetzt, von denen jeder für 1700 V Spannung und 200 A Strom ausgelegt ist. Die Ausgangsspannung jedes Moduls M1',..,Mn' variiert zwischen 800 V und 1150 V. Gemäss Fig. 2 wird die Gleichspannungsquelle des einzelnen Moduls Mx' durch eine Drehstrom-Gleichrichterbrücke 18 mit nachfolgenden Kondensator Cx gebildet, die den am 3-phasigen Spannungseingang 19 anstehenden Drehstrom gleichrichtet. Der Anschluss an das Drehstromnetz wird über ein Schütz 21 gesteuert und mittels Sicherungen 20 abgesichert. Die Ansteuerung des Schalters (IGBTs) Sx erfolgt durch eine Ansteuereinheit 16, die über einen Netztransformator 22 aus dem Netz versorgt wird und Steuerbefehle und Rückmeldungen über faseroptische Steuerleitungen mit einer nicht gezeigten zentralen Steuerung austauscht. Zwischen den Ausgangsklemmen liegt die bereits erwähnte antiparallele Diode Dx.

Wie aus Fig. 1 zu erkennen ist, sind im Lastkreis Induktivitäten in der Grössenordnung von 2 x 500 µH (vor und hinter dem Verbindungskabel 11) und 68 x 10 µH (je 10 µH bei jeder der 68 Module bzw. Stufen), d.h., insgesamt etwa 1,68 mH, vorhanden. Die Kapazitäten der Verbindungskabel 11 und 13 betragen zusammen etwa 10 nF. Bei einer Ausgangsspannung von 50 kV sind in der Kabelkapazität etwa 12 J gespeichert. Bei einem Strom durch die Last 14 von 208 A sind in den Induktivitäten etwa 36 J gespeichert. Zusammen ergibt dies eine gespeicherte Energie von etwa 48 J. Es ist insbesondere diese gespeicherte Energie, die zu den nachfolgend beschriebenen Problemen führt:

Die meisten mit einer PSM-Stromversorgung versorgten elektrischen Lasten (meistens Röhren oder lonenbeschleuniger) können intern Überschläge haben. Diese Überschläge dürfen jedoch zu keinem Schaden der Last führen. Daher muss die PSM-Stromversorgung die Kurzschlussenergie auf typische Werte zwischen 5 - 20 J begrenzen. Der Schutz erfolgt bei den bisher bekannten Anlagen dadurch, dass sämtliche IGBT in den einzelnen Modulen bei einer Schutzauslösung sofort ausgeschaltet werden. Eine spezielle Crowbar-Einrichtung ist nicht vorhanden.

Typischerweise haben nun alle PSM-Systeme wie auch das in Fig. 1 dargestellte im Ausgangskreis bzw. Lastkreis ein LC-Filter. Ohne Induktivität ist es nicht möglich, einen PSM kurzschlussfest zu machen. Das di/dt innerhalb der Abschaltverzögerung wäre sonst so hoch, dass die IGBTs voll in eine Stromsättigung gebracht würden. Eine Kapazität ergibt sich entweder parasitär (hauptsächlich Kabelkapazitäten, s.o.) oder, falls erforderlich, in Form von zusätzlichen diskreten Kondensatoren.

Wie bereits oben erwähnt, speichern sowohl die Kapazitäten als auch die Induktivitäten Energien. Typischerweise sind die kapazitiv und induktiv gespeicherten Energien in der gleichen Grössenordnung. Es ist nun allerdings so, dass die kapazitiv gespeicherte Energie im Kurzschlussfall leicht durch eine Snubber-Beschaltung vernichtet werden kann und somit für die Last nicht schädlich ist.

Die Induktivitäten sind allerdings kritischer. Im Kurzschlussfall steigt während der Ausschaltverzögerung der Strom noch an. Danach fliesst er über den durch die antiparallelen Freilaufdioden gebildeten Freilaufkreis weiter. Die Induktivitäten geben dabei ihre Energie hauptsächlich an den Kurzschluss und an die Freilaufdioden im Kreis ab. Je nach Spannungsverhältnissen können bis ca. 50 % der Energie an den Kurzschluss abgegeben werden. Dies ist teilweise bereits sehr kritisch.

Ausserdem hat dieses System keine Fehlertoleranz: Falls beim Ausschalten ein einzelner IGBT in einem Modul nicht ausschaltet, reicht dies bereits aus, um den Lichtbogen am Überschlag stehen zu lassen. Die Energie ist dann so hoch, dass die Last ohne weiteres zerstört werden kann.

In DE 35 45 772 ist eine Schaltungsanordnung eines Stufenverstärkers beschrieben, der beispielsweise als Aktivfilter bei der Magnetstromversorgung von Teilchenbeschleunigern oder als Halbleitermodulationsverstärker bei Sendern eingesetzt wird und aus einer Reihenschaltung mehrerer Verstärkerstufen besteht.

Die einzelnen Stufen stellen jeweils eine asymmetrische Brückenschaltung, die von einer Gleichspannungsquelle gespeist wird, mit zwei Halbleiterschaltern und zwei Dioden dar. Dabei gibt die Spannungsquelle je nach Schaltzustand der Halbleiterschalter Energie ab oder nimmt Energie auf. Dadurch können bei einer genügend hohen Anzahl von derartigen Verstärkerstufen Oberschwingungen einer Stromversorgung mit hoher Genauigkeit kompensiert werden. Bezüglich der Gefahr eines Kurzschluss in der Last ist im Dokument DE 35 45 772 keine Offenbarung zu finden. Aufgrund der Schaltungsanordnung wird die Kurzschlussenergie jedoch nicht begrenzt, was zu irreversiblen Schäden in der Last führen kann.

### DARSTELLUNG DER ERFINDUNG

Es ist daher Aufgabe der Erfindung, eine Hochspannungs-Gleichstromversorgung nach dem PSM-Prinzip zu schaffen, welche die bei den bekannten Versorgungen auftretenden Nachteile beseitigt und sich insbesondere durch einen sicheren Betrieb im Kurzschlussfall auszeichnet, ohne die mit dem PSM-Prinzip verbundenen Vorteile aufzugeben. Es ist weiterhin Aufgabe der Erfindung, ein sicheres Verfahren zum Betrieb einer solchen Hochspannungs-Gleichstromversorgung anzugeben.

Die Aufgabe wird durch die Gesamtheit der Merkmale der Ansprüche 1 und 10 gelöst. Der Kern der Erfindung ist darin zu sehen, dass zumindest ein Teil der Module, welche die PSM-Versorgung bilden, in einen Betriebsmodus umschaltbar sind, in welchem sie aus dem Lastkreis Energie aufnehmen. Durch diese Eigenschaft der Module ist es möglich, im Kurzschlussfall dadurch gezielt dem Lastkreis Energie zu entziehen, indem eine gewisse Anzahl von Modulen in den entsprechenden Betriebsmodus umgeschaltet wird. Hierdurch lässt sich die Menge der im Lastkreis gespeicherten Energie soweit reduzieren, dass sie keinen weiteren Schaden anrichten kann.

Bevorzugt wird diese Eigenschaft der Versorgung dadurch erreicht, dass die in einen Energie aufnehmenden Betriebsmodus umschaltbaren Module als Mehrquadrantensteller ausgebildet sind. Eine besonders einfache und wirkungsvolle Ausführungsform zeichnet sich dadurch aus, dass die in einen Energie aufnehmenden Betriebsmodus umschaltbaren Module als Zweiquadrantensteller mit Spannungsumkehr ausgebildet sind, dass die als Zweiquadrantensteller mit Spannungsumkehr ausgebildeten Module jeweils eine Gleichspannungsquelle aufweisen, welcher ein erster Zweig mit einer Serieschaltung einer in Sperrrichtung gepolten ersten Diode und eines ersten Schalters und ein zweiter Zweig mit einer Serieschaltung eines zweiten Schalters und einer in Sperrrichtung gepolten zweiten Diode parallelgeschaltet sind, und dass die beiden Ausgänge der Module jeweils zwischen dem ersten Schalter und der ersten Diode bzw. dem zweiten Schalter und der zweiten Diode angeschlossen sind.

Besonders wirkungsvoll ist die Hochspannungs-Gleichstromversorgung, wenn gemäss einer bevorzugten Weiterbildung der Erfindung die ersten und zweiten Schalter als Halbleiterschalter, insbesondere als IGBTs, ausgebildet sind.

Wenn nur ein Teil der Module in einen Energie aufnehmenden Betriebsmodus umschaltbar sind, ist es zweckmässig, wenn eine Steuerung vorgesehen ist, welche über Steuerleitungen die Module im Kurzschlussfall abschaltet und/oder in einen Energie aufnehmenden Betriebsmodus umschaltet.

Wenn alle Module gleich ausgebildet sind, ist es zweckmässig, wenn eine Steuerung vorgesehen ist, welche über Steuerleitungen im Kurzschlussfall in den Modulen wahlweise einen der beiden Schalter oder beide Schalter öffnet.

Wenn gemäss einer bevorzugten Ausgestaltung alle Module gleich aufgebaut sind, ergeben sich die Vorteile einer Serienproduktion und einer Redundanz bzw. Fehlertoleranz gegenüber Fehlfunktionen in den einzelnen Modulen.

Damit in jedem Fall ohne Hilfsspeisung ein Freilauf geschaltet werden kann, ist es von Vorteil, wenn zwischen den Ausgängen der in einen Energie aufnehmenden Betriebsmodus umschaltbaren Module eine Vorrichtung zum Herstellen eines Durchgangs, insbesondere ein Öffnerkontakt eines Schützes, angeordnet ist.

Um beim Abschalten im stromlosen Zustand annähernd Nullspannung am Ausgang zu erhalten, ist es von Vorteil, wenn zwischen den Ausgängen der in einen Energie aufnehmenden Betriebsmodus umschaltbaren Module ein Grundlastwiderstand angeordnet ist.

Eine bevorzugte Ausgestaltung des erfindungsgemässen Verfahrens ist dadurch gekennzeichnet, dass die in einen Energie aufnehmenden Betriebsmodus umschaltbaren Module als Zweiquadrantensteller mit Spannungsumkehr ausgebildet sind, welche jeweils eine Gleichspannungsquelle aufweisen, welcher ein erster Zweig mit einer Serieschaltung einer in Sperrrichtung gepolten ersten Diode und eines ersten Schalters und ein zweiter Zweig mit einer Serieschaltung eines zweiten Schalters und einer in Sperrrichtung gepolten zweiten Diode parallelgeschaltet sind, und wobei die beiden Ausgänge der Module jeweils zwischen dem ersten Schalter und der ersten Diode bzw. dem zweiten Schalter und der zweiten Diode angeschlossen sind, und dass zur Umschaltung der Module in den Energie aufnehmenden Betriebsmodus die beiden Schalter geöffnet werden.

Eine weitere Ausgestaltung des erfindungsgemässen Verfahrens ist dadurch gekennzeichnet, dass alle Module als Zweiquadrantensteller mit Spannungsumkehr ausgebildet sind, welche jeweils eine Gleichspannungsquelle aufweisen, welcher ein erster Zweig mit einer Serieschaltung einer in Sperrrichtung gepolten ersten Diode und eines ersten Schalters und ein zweiter Zweig mit einer Serieschaltung eines zweiten Schalters und einer in Sperrrichtung gepolten zweiten Diode parallelgeschaltet sind, und wobei die beiden Ausgänge der Module jeweils zwischen dem ersten Schalter und der ersten Diode bzw. dem zweiten Schalter und der zweiten Diode angeschlossen sind, und dass im Rahmen der Schnellabschaltung zum Abschalten der Module einer der beiden Schalter geöffnet, und zum Umschalten der Module in den Energie aufnehmenden Betriebsmodus die beiden Schalter geöffnet werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: eine vereinfachtes Schaltbild einer bekannten Hochspannungs-Gleichstromversorgung für eine Mehrzahl von parallelgeschalteten Klystrons;
- Fig. 2: das vereinfachte Schaltbild eines Moduls bzw. einer Schaltstufe der bekannten Hochspannungs-Gleichstromversorgung aus Fig. 1;
- Fig. 3: eine Abfolge (A bis D) von verschiedenen (normalen) Schalt- bzw. Betriebszuständen eines Moduls einer Hochspannungs-Gleichstromversorgung gemäss einem bevorzugten Ausführungsbeispiel der Erfindung sowie die dazugehörigen Verläufe der Ausgangsspannung (Vₒᵤₜ) und der Steuerspannungen (V1 und V2) der beiden Schalter (Transistoren) des Moduls;
- Fig. 4: den Betriebszustand des Moduls aus Fig. 3, in welchem beide Schalter ausgeschaltet sind, und das Modul aus dem Ausgangskreis Energie aufnimmt (Spannungsumkehr);
- Fig. 5: das vereinfachte Schaltbild einer Hochspannungs-Gleichstromversorgung gemäss einem bevorzugten Ausführungsbeispiel der Erfindung mit angeschlossener Last und den Induktivitäten und Kapazitäten des Ausgangs- bzw. Lastkreises sowie einer Steuerung für die Module; und
- Fig. 6: ein vereinfachtes Schaltbild eines Moduls für eine Hochspannungs-Gleichstromversorgung gemäss einem weiteren bevorzugten Ausführungsbeispiel der Erfindung, wobei zwischen den Ausgängen des Moduls zusätzlich Mittel zur Schaltung eines Freilaufs und zur Sicherstellung einer Nullspannung am Ausgang vorgesehen sind.

### WEGE ZUR AUSFÜHRUNG DER ERFINDUNG

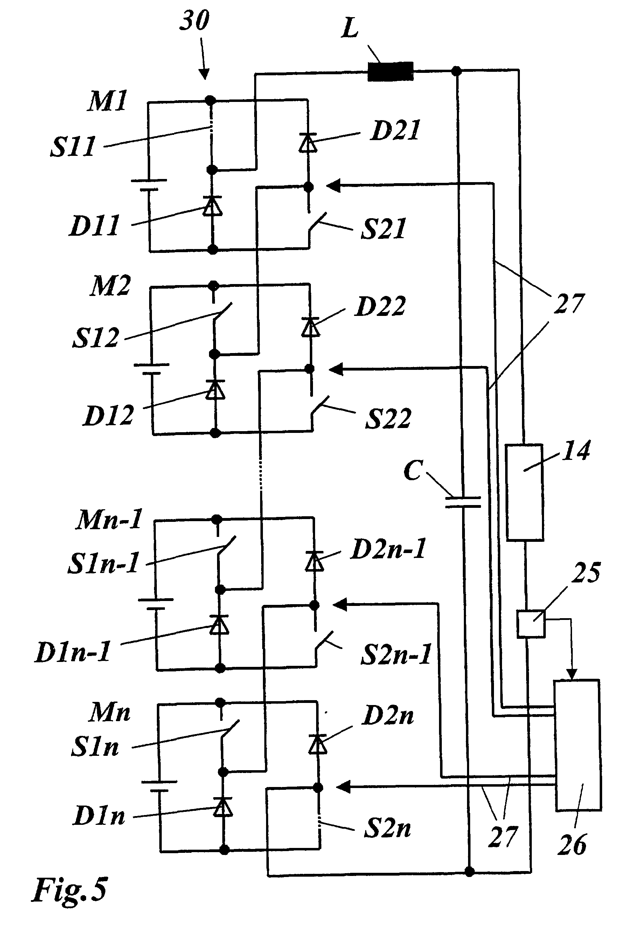

In Fig. 5 ist das vereinfachte Schaltbild einer Hochspannungs-Gleichstromversorgung gemäss einem bevorzugten Ausführungsbeispiel der Erfindung mit angeschlossener Last und den Induktivitäten und Kapazitäten des Ausgangs- bzw. Lastkreises sowie einer Steuerung für die Module wiedergegeben. Die Hochspannungs-Gleichstromversorgung 30 umfasst eine Vielzahl von Modulen oder Schaltstufen M1 ,..,Mn, die mit ihren Ausgängen in der für die PSM-Konfiguration charakteristischen Weise in Serie geschaltet sind. Die aufsummierten Ausgangsspannungen der Module M1,..,Mn werden an eine Last 14 angelegt. Neben der Last 14 liegt im Ausgangskreis eine Induktivität L (als Summe der verschiedenen parasitären und bewusst eingebauten Induktivitäten) sowie eine Kapazität C (überwiegend die Summe der Leitungskapazitäten). Im Ausführungsbeispiel der Fig. 5 sind alle Module M1,..,Mn gleichartig aufgebaut, d.h., für die Umschaltung in einen Energie aufnehmenden Betriebsmodus ausgelegt und geeignet. Es ist im Rahmen der Erfindung aber auch denkbar, nur einen Teil der Module in der in Fig. 5 gezeigten Weise aufzubauen, und die restlichen Module in der in Fig. 1 oder 2 gezeigten herkömmlichen Art auszulegen. Wichtig ist, dass eine ausreichende Zahl von neuartigen Modulen vorhanden sind, um im Fall der Schnellabschaltung genügend Energie aus dem Ausgangskreis aufnehmen zu können.

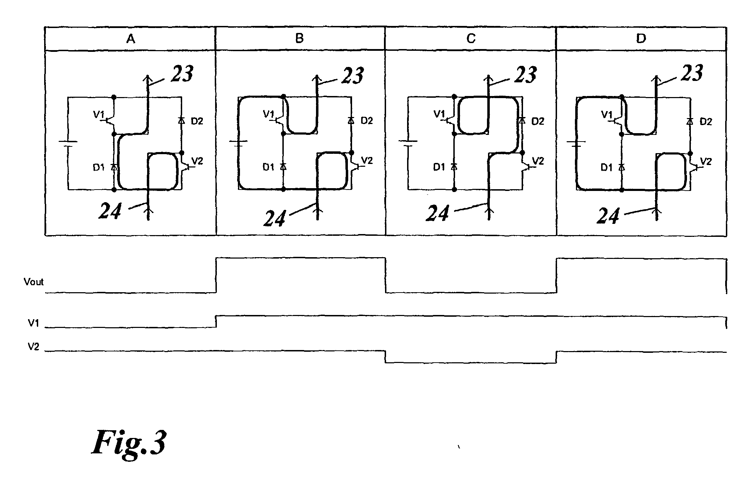

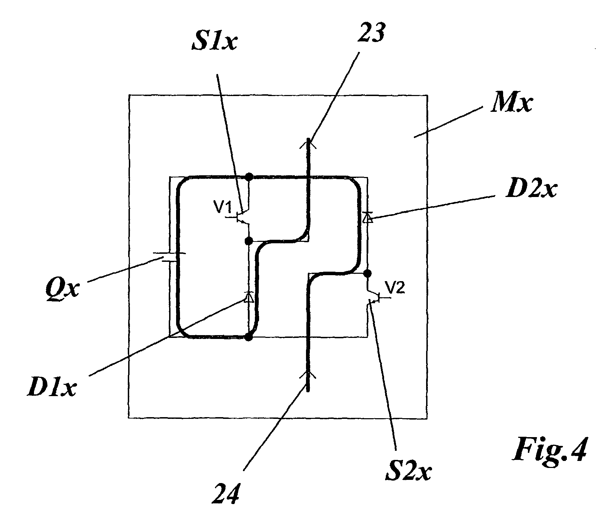

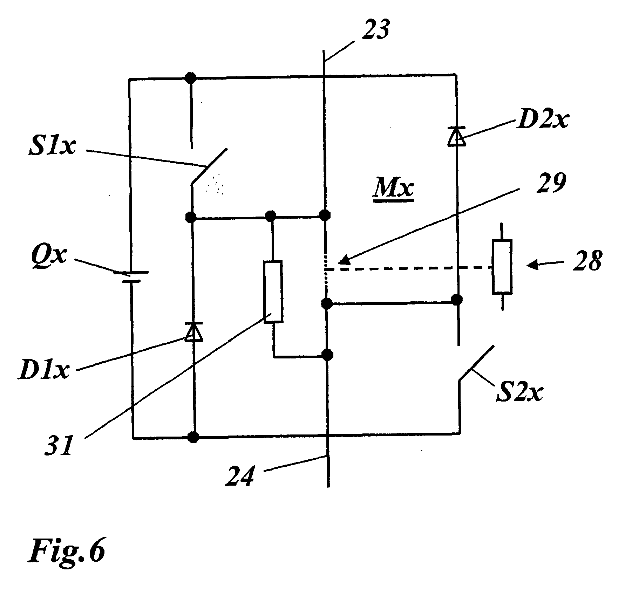

Die einzelnen Module M1,..,Mn aus Fig. 5 sind als Gleichstromsteller für den Zweiquadrantenbetrieb mit Spannungsumkehr bzw. als Zweiquadrantensteller mit Spannungsumkehr ausgelegt. Dies wird erreicht durch eine Konfiguration, bei der einer Gleichstromquelle (Qx in Fig. 4 bzw. 6) ein erster Zweig mit einer Serieschaltung aus einer ersten antiparallelen Diode D1x bzw. D11,..,D1n und einem ersten Schalter S1 x bzw. S11,..,S1n und ein zweiter Zweig mit einer Serieschaltung aus einem zweiten Schalter S2x bzw. S21,..,S2n und einer zweiten antiparallelen Diode D2x bzw. D21,..,D2n parallelgeschaltet sind. Die Ausgänge 23, 24 der Module M1,..,Mn sind jeweils an die Zweige zwischen dem Schalter und der antiparallelen Diode angeschlossen. Für die Schalter S11,..,S1n und S21,..,S2n werden vorzugsweise IGBTs eingesetzt (siehe auch Fig. 3), die von einer Steuerung 26 (Fig. 5) mittels entsprechender (faseroptische) Steuerleitungen 27 im Normalbetrieb mit Steuerspannungen V1, V2 (Fig. 3) angesteuert werden. Die Steuerung 26 steht mit einer im Ausgangskreis (Lastkreis) angeordneten Kurzschlussdetektionsvorrichtung 25 in Verbindung und leitet ggf. eine Schnellabschaltung der Hochspannungs-Gleichstromversorgung 30 ein, wenn ein Kurzschluss im Ausgangskreis detektiert wird.

In Fig. 3 ist die Schaltsequenz eines Moduls bzw. einer Schaltstufe im Normalbetrieb dargestellt. Es werden in der Sequenz nacheinander vier unterschiedliche Zustände A, B, C und D durchlaufen. Der von einem Ausgang 24 zum anderen Ausgang 23 durch das Modul hindurchgehende Strom ist mit seinem Pfad jeweils als dicke Linie eingezeichnet. Der zeitliche Verlauf der Ausgangsspannung Vₒᵤₜ und der Steuerspannungen V1 und V2 für die beiden Halbleiterschalter sind im unteren Teil der Fig. 3 wiedergegeben.

Im Zustand A ist der erste Schalter (Steuerspannung V1) abgeschaltet, der zweite Schalter (Steuerspannung V2) dagegen durchgeschaltet. Der Strom läuft im Freilauf über den zweiten Schalter und die erste antiparallel Diode D1. Die Gleichspannungsquelle ist nicht beteiligt. Das Modul ist in herkömmlicher Weise abgeschaltet.

Im Zustand B sind beide Schalter durchgeschaltet. Der Strom läuft über die beiden Schalter durch die Gleichspannungsquelle. Das Modul ist in herkömmlicher Weise eingeschaltet und trägt mit Vₒᵤₜ zur summierten Ausgangsspannung der Versorgung bei.

Im Zustand C ist der zweite Schalter (Steuerspannung V2) abgeschaltet, der erste Schalter (Steuerspannung V1) dagegen durchgeschaltet. Der Strom läuft im Freilauf über die zweite antiparallel Diode D2 und den ersten Schalter. Die Gleichspannungsquelle ist nicht beteiligt. Das Modul ist in herkömmlicher Weise abgeschaltet.

Im Zustand D sind wieder beide Schalter durchgeschaltet. Der Strom läuft (wie im Zustand B) über die beiden Schalter durch die Gleichspannungsquelle. Das Modul ist in herkömmlicher Weise eingeschaltet und trägt mit Vₒᵤₜ zur summierten Ausgangsspannung der Versorgung bei.

Im Normalbetrieb, wie er durch die in Fig. 3 dargestellte Schaltsequenz repräsentiert wird, kann von einem identischen Systemverhalten verglichen mit einer konventionellen PSM-Versorgung ausgegangen werden. Unterschiede gibt es dagegen bei der Schnellabschaltung: Bei einer Schnellabschaltung der Hochspannungs-Gleichstromversorgung 30 gemäss Fig. 5 wird grundsätzlich in allen Modulen M1,..,Mn mindestens ein Schalter bzw. IGBT ausgeschaltet. Zusätzlich wird auf einigen bis allen Stufen der zweite Schalter bzw. IGBT auch ausgeschaltet. Es ergibt sich dann der in Fig. 4 dargestellte Betriebszustand. Die Schalter S1x und S2x sind ausgeschaltet. Der Strom fliesst dann im Modul Mx vom einen Ausgang 24 zum anderen Ausgang 23 lediglich durch die Dioden D1x und D2x und in umgekehrter Richtung durch die Gleichspannungsquelle Qx. Die Ausgangsspannung des Moduls ist dann negativ (Spannungsumkehr). Das Modul Mx funktioniert als Leistungssenke und nimmt Energie aus dem Ausgangskreis auf. Zum Befehlen dieser Schnellabschaltung benötigt es über die herkömmlichen Steuerleitungen hinaus einen zusätzlichen Befehlslichtleiter zu jedem Modul.

Die Schnellabschaltung mit einer Versorgung gemäss der Erfindung bietet folgende Vorteile:
- Die negative Spannung der invers (d.h. in Spannungsumkehr) gesteuerten Module (Stufen) fällt primär an den Induktivitäten an. Dadurch werden diese schneller entladen (hohe Spannung = hohes di/dt).
- Die gespeicherte Energie in den Induktivitäten wird an den Zwischenkreis (entspricht dem Kondensator Cx in Fig. 2) der invers gesteuerten Module (Stufen) abgegeben.
- Falls eine oder wenige Module (Stufen) defekt sind und weiterhin positive Spannung erzeugen, müssen diese gegen die Spannung der invers gesteuerten Module arbeiten. Dadurch kann das System im Kurzschlussfall immer noch abschalten, solange mehr Module invers gesteuert werden als defekt sind. Das System ist somit fehlertolerant.

Grundsätzlich könnte man alle Module M1,..,Mn bei der Schnellabschaltung sofort invers schalten (beide Schalter S1x und S2x sind ausgeschaltet). Dann würde sich aber eine negative Spannung gleich der Summe aller Zwischenkreisspannungen der Module M1,..,Mn ergeben. Diese Spannung kann sehr hoch sein, und zwar im Betrag höher als die maximale Betriebsspannung. Die Hochspannungs-Gleichstromversorgung 30 hat nämlich immer etwas Regelreserve, d.h. mehr Module, als eigentlich unbedingt notwendig sind. Daher werden auch in Vorwärtsrichtung nie alle Module gleichzeitig eingeschaltet. Es kann daher von Vorteil sein, im Kurzschlussfall nur einen vorbestimmten Teil der Module M1,..,Mn invers zu steuern.

Eine andere Besonderheit betrifft den Modul- bzw. Stufenschutz. Bei den bekannten Modulen gemäss Fig. 2 ist es nicht kritisch, wenn ein Modul komplett ausgeschaltet ist. Die Freilauffunktion über die antiparallele Diode (Dx) im Ausgang ist ohne aktives Schalten eines IGBT möglich. Dies ist bei einem Modul der in Fig. 4 dargestellten Art nicht mehr der Fall. Daher ist es zweckmässig, zusätzliche Schutzfunktionen zu implementieren.

Eine Möglichkeit des Schutzes besteht gemäss Fig. 6 darin, zwischen den beiden Ausgängen 23, 24 des Moduls Mx einen Öffnerkontakt 29 eines Schützes 28 anzuordnen. Damit kann ohne Hilfsspeisung ein Freilauf des Moduls geschaltet werden.

Um beim Abschalten des Moduls Mx im stromlosen Zustand annähernd Nullspannung an den Ausgängen 23, 24 zu erhalten, ist es weiterhin von Vorteil, einen Grundlastwiderstand 31 zwischen die Ausgänge 23, 24 zu legen.

Schliesslich kann es von Vorteil sein, noch eine Sicherheitsfunktion vorzusehen, die unabhängig vom Inversbefehl an das Modul bei zu hoher Zwischenkreisspannung das Modul in den Freilaufbetrieb schaltet. Dies ist notwendig, um im Falle eines defekten Lichtleiters für den Inversbefehl den Zwischenkreis des Moduls vor Überspannung zu schützen.

### BEZUGSZEICHENLISTE

- 10,30: Hochspannungs-Gleichstromversorgung
- 11,13: Verbindungskabel
- 12: Hochspannungsanschlusskasten
- 14: Last
- 15: Messvorrichtung
- 16: Ansteuereinheit (Modul)
- 17: Steuerleitung (faseroptisch)
- 18: Gleichrichterbrücke
- 19: Spannungseingang (3-phasig)
- 20: Sicherung
- 21: Schütz
- 22: Netztransformator (Ansteuereinheit)
- 23,24: Ausgang (Anschluss)
- 25: Kurzschlussdetektionsvorrichtung
- 26: Steuerung
- 27: Steuerleitung (faseroptisch)
- 28: Schütz
- 29: Öffnerkontakt (Schütz)
- 31: Grundlastwiderstand
- C: Kapazität
- Cx: Kondensator
- D1,..,Dn: Diode
- D11,..,D2n: Diode
- D1x,D2x: Diode
- K1,K2: Klystron
- L: Induktivität
- M1,..,Mn,Mx: Modul
- M1',..,Mn',Mx': Modul
- Q;Q1,..,Qn,Qx: Gleichspannungsquelle
- S1,..,Sn: Schalter
- S11,..,S2n: Schalter (IGBT)
- S1x,S2x: Schalter (IGBT)

## Patentansprüche

1. Hochspannungs-Gleichstromversorgung (30), mit einer Mehrzahl von in Serie geschalteten Modulen (Mx; M1,..,Mn), die jeweils als Gleichstromsteller ausgebildet sind, wobei die Ausgangsspannungen der Module (Mx; M1,..,Mn) in der Serieschaltung aufsummiert werden, und die so gebildete Summenspannung unter Bildung eines Lastkreises an einer Last (14) anliegt, und wobei zumindest ein Teil der Module (Mx; M1,..,Mn) in einen Betriebsmodus umschaltbar sind, in welchem sie aus dem Lastkreis Energie aufnehmen, **dadurch gekennzeichnet, dass** eine Steuerung (26) vorgesehen ist, welche im Kurzschlussfall über Steuerleitungen (27) zumindest einen Teil der in einen Energie aufnehmenden Betriebsmodus umschaltbaren Module (Mx; M1,..,Mn) in den Energie aufnehmenden Betriebsmodus umschaltet.

2. Hochspannungs-Gleichstromversorgung nach Anspruch 1, **dadurch gekennzeichnet, dass** die Steuerung (26) im Kurzschlussfall über die Steuerleitungen (27) die restlichen Module abschaltet.

3. Hochspannungs-Gleichstromversorgung nach Anspruch 1 oder 2, **dadurch gekennzeichnet, dass** die in einen Energie aufnehmenden Betriebsmodus umschaltbaren Module als Mehrquadrantensteller ausgebildet sind.

4. Hochspannungs-Gleichstromversorgung nach Anspruch 3, **dadurch gekennzeichnet, dass** die in einen Energie aufnehmenden Betriebsmodus umschaltbaren Module als Zweiquadrantensteller mit Spannungsumkehr ausgebildet sind.

5. Hochspannungs-Gleichstromversorgung nach Anspruch 4, **dadurch gekennzeichnet, dass** die als Zweiquadrantensteller mit Spannungsumkehr ausgebildeten Module jeweils eine Gleichspannungsquelle (Qx; Q1,..,Qn) aufweisen, welcher ein erster Zweig mit einer Serieschaltung einer in Sperrrichtung gepolten ersten Diode (D1x; D11,..,D1n) und eines ersten Schalters (S1x; S11,..,S1n) und ein zweiter Zweig mit einer Serieschaltung eines zweiten Schalters (S2x; S21,..,S2n) und einer in Sperrrichtung gepolten zweiten Diode (D2x; D21,..,D2n) parallelgeschaltet sind, und dass die beiden Ausgänge (23, 24) der Module jeweils zwischen dem ersten Schalter (S1x; S11,..,S1 n) und der ersten Diode (D1x; D11,..,D1 n) bzw. dem zweiten Schalter (S2x; S21,..,S2n) und der zweiten Diode (D2x; D21,..,D2n) angeschlossen sind.

6. Hochspannungs-Gleichstromversorgung nach Anspruch 5, **dadurch gekennzeichnet, dass** die ersten und zweiten Schalter (S1x; S11,..,S1 n; S2x; S21,..,S2n) als Halbleiterschalter, insbesondere als IGBTs, ausgebildet sind.

7. Hochspannungs-Gleichstromversorgung nach einem der Ansprüche 5 und 6, **dadurch gekennzeichnet, dass** eine Steuerung (26) vorgesehen ist, welche über Steuerleitungen (27) im Kurzschlussfall in den Modulen (Mx; M1,..,Mn) wahlweise einen der beiden Schalter (S1x; S11,..,S1n; S2x; S21,..,S2n) oder beide Schalter (S1x; S11,...S1n; S2x; S21,..,S2n) öffnet.

8. Hochspannungs-Gleichstromversorgung nach einem der Ansprüche 1 bis 7, **dadurch gekennzeichnet, dass** alle Module (Mx; M1,..,Mn) gleich aufgebaut sind.

9. Hochspannungs-Gleichstromversorgung nach Anspruch 5, **dadurch gekennzeichnet, dass** zwischen den Ausgängen (23, 24) der in einen Energie aufnehmenden Betriebsmodus umschaltbaren Module ein Öffnerkontakt (29) eines Schützes (28) angeordnet ist.

10. Hochspannungs-Gleichstromversorgung nach Anspruch 5, **dadurch gekennzeichnet, dass** zwischen den Ausgängen (23, 24) der in einen Energie aufnehmenden Betriebsmodus umschaltbaren Module ein Grundlastwiderstand (31) angeordnet ist.

11. Verfahren zum Betrieb einer Hochspannungs-Gleichstromversorgung nach einem der Ansprüche 1 bis 10, **dadurch gekennzeichnet, dass** beim Auftreten eines Kurzschlusses im Lastkreis eine Schnellabschaltung der Hochspannungs-Gleichstromversorgung (30) vorgenommen wird, und dass im Rahmen der Schnellabschaltung ein Teil der Module (Mx; M1,..,Mn) abgeschaltet und zumindest ein Teil der in einen Energie aufnehmenden Betriebsmodus umschaltbaren Module in den Energie aufnehmenden Betriebsmodus umgeschaltet wird.

12. Verfahren nach Anspruch 11, **dadurch gekennzeichnet, dass** die in einen Energie aufnehmenden Betriebsmodus umschaltbaren Module als Zweiquadrantensteller mit Spannungsumkehr ausgebildet sind, welche jeweils eine Gleichspannungsquelle (Qx; Q1,..,Qn) aufweisen, welcher ein erster Zweig mit einer Serieschaltung einer in Sperrrichtung gepolten ersten Diode (D1x; D11,..,D1n) und eines ersten Schalters (S1x; S11,..,S1n) und ein zweiter Zweig mit einer Serieschaltung eines zweiten Schalters (S2x; S21,..,S2n) und einer in Sperrrichtung gepolten zweiten Diode (D2x; D21,..,D2n) parallelgeschaltet sind, und wobei die beiden Ausgänge (23, 24) der Module jeweils zwischen dem ersten Schalter (S1x; S11,..,S1n) und der ersten Diode (D1x; D11,..,D1n) bzw. dem zweiten Schalter (S2x; S21,..,S2n) und der zweiten Diode (D2x; D21,..,D2n) angeschlossen sind, und dass zur Umschaltung der Module in den Energie aufnehmenden Betriebsmodus die beiden Schalter (S1x; S11,..,S1n; S2x; S21,..,S2n) geöffnet werden.

13. Verfahren nach Anspruch 11, **dadurch gekennzeichnet, dass** alle Module (Mx; M1,..,Mn) als Zweiquadrantensteller mit Spannungsumkehr ausgebildet sind, welche jeweils eine Gleichspannungsquelle (Qx; Q1,..,Qn) aufweisen, welcher ein erster Zweig mit einer Serieschaltung einer in Sperrrichtung gepolten ersten Diode (D1x; D11,..,D1 n) und eines ersten Schalters (S1x; S11,..,S1n) und ein zweiter Zweig mit einer Serieschaltung eines zweiten Schalters (S2x; S21,..,S2n) und einer in Sperrrichtung gepolten zweiten Diode (D2x; D21,..,D2n) parallelgeschaltet sind, und wobei die beiden Ausgänge (23, 24) der Module jeweils zwischen dem ersten Schalter (S1x; S11,..,S1 n) und der ersten Diode (D1x; D11,..,D1n) bzw. dem zweiten Schalter (S2x; S21,..,S2n) und der zweiten Diode (D2x; D21,..,D2n) angeschlossen sind, und dass im Rahmen der Schnellabschaltung zum Abschalten der Module einer der beiden Schalter (S1 x; S11,..,S1n; S2x; S21,..,S2n) geöffnet, und zum Umschalten der Module in den Energie aufnehmenden Betriebsmodus die beiden Schalter (S1x; S11,..,S1n; S2x; S21,..,S2n) geöffnet werden.

## Claims

1. A high-voltage DC power supply (30), having a plurality of series-connected modules (Mx; M1,..., Mn), which are each embodied as DC-DC converters, the output voltages of the modules (Mx; M1, ..., Mn) being added up in the series connection, and the thus-formed total voltage, forming a load circuit, being applied to a load (14), and at least some of the modules (Mx; M1, ..., Mn) being switchable into an operating mode in which they consume energy from the load circuit, **characterized in that** a controller (26) is provided which via control lines (27), in the event of a short circuit switches at least some of the modules (Mx; M1, ..., Mn) that are switchable into an energy-consuming operating mode into the energy-consuming operating mode.

2. The high-voltage DC power supply of claim 1, **characterized in that** in the event of a short circuit, the controller (26) switches off the remaining modules via the control lines (27).

3. The high-voltage DC power supply of claim 1 or 2, **characterized in that** the modules that are switchable into an energy-consuming operating mode are embodied as multi-quadrant converters.

4. The high-voltage DC power supply of claim 3, **characterized in that** the modules that are switchable into an energy-consuming operating mode are embodied as two-quadrant converters with a voltage reversal.

5. The high-voltage DC power supply of claim 4, **characterized in that** the modules embodied as two-quadrant converters with a voltage reversal each have a DC source (Qx; Q1, ..., Qn), to which a first branch, having a series circuit of a first diode (D1x; D11, ..., D1n) polarized in the blocking direction and a first switch (S1x; S11, ..., S1n), and a second branch, having a series circuit of a second switch (S2x; S21, ..., S2n) and a second diode (D2x; D21, ..., D2n) polarized in the blocking direction, are connected in parallel; and that the two outputs (23, 24) of the modules are each connected between the first switch (S1x; S11, ..., S1n) and the first diode (D1x; D11, ..., D1n) and between the second switch (S2x; S21, ..., S2n) and the second diode (D2x; D21, ..., D2n), respectively.

6. The high-voltage DC power supply of claim 5, **characterized in that** the first and second switches (S1x; S11, ..., S1n; S2x; S21, ..., S2n) are embodied as semiconductor switches, in particular as IGBTs.

7. The high-voltage DC power supply of one of claims 5 and 6, **characterized in that** a controller (26) is provided, which via control lines (27) in the event of a short circuit in the modules (Mx; M1, ..., Mn) selectively opens one of the two switches (S1x; S11, ..., S1n; S2x; S21, ..., S2n) or both switches (S1x; S11, ..., S1n; S2x; S21, ..., S2n).

8. The high-voltage DC power supply of one of claims 1-7, **characterized in that** all the modules (Mx; M1, ..., Mn) are embodied identically.

9. The high-voltage DC power supply of claim 5, **characterized in that** an opener contact (29) of a contactor (28) is disposed between the outputs (23, 24) of the modules that are switchable into an energy-consuming operating mode.

10. The high-voltage DC power supply of claim 5, **characterized in that** a constant-load resistor (31) is disposed between the outputs (23, 24) of the modules that are switchable into an energy-consuming operating mode.

11. A method for operating a high-voltage DC power supply of one of claims 1-10, **characterized in that** upon the occurrence of a short circuit in the load circuit, a fast shutoff of the high-voltage DC power supply (3) is done; and that in the fast shutoff, some of the modules (Mx; M1, ..., Mn) are shut off and at least some of the modules that are switchable into an energy-consuming operating mode are switched into the energy-consuming operating mode.

12. The method of claim 11, **characterized in that** the modules that are switchable into an energy-consuming operating mode are embodied as two-quadrant converters with a voltage reversal, which each have a DC source (Qx; Q1, ..., Qn), to which a first branch, having a series circuit of a first diode (D1x; D11,..., D1n) polarized in the blocking direction and a first switch (S1x; S 11, ..., S1n), and a second branch, having a series circuit of a second switch (S2x; S21, ..., S2n) and a second diode (D2x; D21, ..., D2n) polarized in the blocking direction, are connected in parallel, the two outputs (23, 24) of the modules each being connected between the first switch (S1x; S11, ..., S1n) and the first diode (D1x; D11, ..., D1n) and between the second switch (S2x; S21, ..., S2n) and the second diode (D2x; D21, ..., D2n), respectively; and that for switching the modules into the energy-consuming operating mode, both switches (S1x; S11, ..., S1n; S2x; S21, ..., S2n) are opened.

13. The method of claim 11, **characterized in that** all the modules (Mx; M1, ..., Mn) are embodied as two-quadrant converters with a voltage reversal, which each have a DC source (Qx; Q1, ..., Qn), to which a first branch, having a series circuit of a first diode (D1x; D11, ..., D1n) polarized in the blocking direction and a first switch (S1x; S11, ..., S1n), and a second branch, having a series circuit of a second switch (S2x; S21, ..., S2n) and a second diode (D2x; D21, ..., D2n) polarized in the blocking direction, are connected in parallel, the two outputs (23, 24) of the modules each being connected between the first switch (S1x; S11, ..., S1n) and the first diode (D1x; D11, ..., D1n) and between the second switch (S2x; S21, ..., S2n) and the second diode (D2x; D21, ..., D2n), respectively; and that in the fast shutoff for shutting off the modules, one of the two switches (S1x S11, ..., S1n; S2x S21, ..., S2n) is opened, and for switching the modules into the energy-consuming operating mode, both switches (S1x; S11, ..., S1n; S2x; S21, ..., S2n) are opened.

## Revendications

1. Alimentation de courant continu haute tension (30) avec une pluralité de modules (Mx ; M1, ..., Mn) branchés en série, qui sont conçus chacun comme des convertisseurs de courant continu, les tensions de sortie des modules (Mx ; M1, ..., Mn) branchés en série étant additionnées et la tension ainsi formée par addition est appliquée à une charge (14) en formant un circuit de charge et au moins une partie des modules (Mx ; M1, ..., Mn) pouvant être commutés dans un mode de fonctionnement, dans lequel ils absorbent de l'énergie provenant du circuit de charge, **caractérisée en ce qu'**un dispositif de commande (26) est prévu, qui, en cas de court-circuit, commute, à l'aide des lignes de commande (27), au moins une partie des modules (Mx ; M1, ..., Mn) commutables dans le mode de fonctionnement absorbant de l'énergie dans le mode de fonctionnement absorbant de l'énergie.

2. Alimentation de courant continu haute tension selon la revendication 1, **caractérisée en ce que**, en cas de court-circuit, le dispositif de commande (26) coupe les modules restants à l'aide des lignes de commandes (27).

3. Alimentation de courant continu haute tension selon la revendication 1 ou 2, **caractérisée en ce que** les modules commutables dans un mode de fonctionnement absorbant de l'énergie sont conçus comme des convertisseurs multi-quadrants.

4. Alimentation de courant continu haute tension selon la revendication 3, **caractérisée en ce que** les modules commutables dans un mode de fonctionnement absorbant de l'énergie sont conçus comme des convertisseurs à deux quadrants avec inversion de tension.

5. Alimentation de courant continu haute tension selon la revendication 4, **caractérisée en ce que** les modules sont conçus comme des convertisseurs à deux quadrants avec inversion de tension qui comprennent chacun une source de tension continue (Qx ; Q1, ..., Qn), dans laquelle un premier embranchement avec un branchement en série d'une première diode polarisée dans le sens bloquant (D1x ; D11, ..., D1n) et d'un premier interrupteur (S1x ; S11, ..., S1n) et un deuxième embranchement avec un branchement en série d'un deuxième interrupteur (S2x ; S21, ..., S2n) et d'une diode polarisée dans le sens bloquant (D2x ; D21, ..., D2n) sont branchés en parallèle, et **en ce que** les deux sorties (23, 24) des modules sont branchées chacune entre le premier interrupteur (S1x ; S11, ..., S1n) et la première diode (D1x ; D11, ..., D1n) ou entre le deuxième interrupteur (S2x ; S21, ..., S2n) et la deuxième diode (D2x ; D21, ..., D2n).

6. Alimentation de courant continu haute tension selon la revendication 5, **caractérisée en ce que** le premier et le deuxième interrupteurs (S1x ; S11, ..., S1n ; S2x ; S21, ..., S2n) sont conçus comme des interrupteurs à semi-conducteurs, plus particulièrement comme des IGBT.

7. Alimentation de courant continu haute tension selon l'une des revendications 5 et 6, **caractérisée en ce qu'**un dispositif de commande (26) est prévu, qui ouvre sélectivement un des deux interrupteurs (S1x ; S11, ..., S1n ; S2x ; S21, ..., S2n) ou les deux interrupteurs (S1x ; S11, ..., S1n ; S2x ; S21, ..., S2n) à l'aide de lignes de commande (27) en cas de court-circuit dans les modules (Mx ; M1, ..., Mn).

8. Alimentation de courant continu haute tension selon l'une des revendications 1 à 7, **caractérisée en ce que** tous les modules (Mx ; M1, ..., Mn) présentent la même structure.

9. Alimentation de courant continu haute tension selon la revendication 5, **caractérisée en ce que**, entre les sorties (23, 24) des modules commutables dans un mode de fonctionnement absorbant de l'énergie, se trouve un contact normalement fermé (29) d'un contacteur (28).

10. Alimentation de courant continu haute tension selon la revendication 5, **caractérisée en ce que**, entre les sorties (23, 24) des modules commutables dans un mode de fonctionnement absorbant de l'énergie, se trouve une résistance de charge de base (31).

11. Procédé d'utilisation d'une alimentation de courant continu haute tension selon l'une des revendications 1 à 10, **caractérisé en ce que**, lors de l'apparition d'un court-circuit dans le circuit de charge, une coupure automatique de l'alimentation de courant continu à haute tension (30) est effectuée et **en ce que**, dans le cadre de la coupure rapide, une partie des modules (Mx ; M1, ..., Mn) est coupée et au moins une partie des modules commutables dans un mode de fonctionnement absorbant de l'énergie est commutée dans le mode de fonctionnement absorbant de l'énergie.

12. Procédé selon la revendication 11, **caractérisé en ce que** les modules commutables dans un mode de fonctionnement absorbant de l'énergie sont conçus comme des convertisseurs à deux quadrants avec inversion de tension, qui comprennent chacun une source de tension continue (Qx ; Q1, ..., Qn), dans laquelle un premier embranchement avec un branchement en série d'une première diode polarisée dans le sens bloquant (D1x ; D11, ..., D1n) et d'un premier interrupteur (S1x ; S11, ..., S1n) et un deuxième embranchement avec un branchement en série d'un deuxième interrupteur (S2x ; S21, ..., S2n) et d'une diode polarisée dans le sens bloquant (D2x ; D21, ..., D2n) sont branchés en parallèle, et les deux sorties (23, 24) des modules étant branchées chacune entre le premier interrupteur (S1x ; S11, ..., S1n) et la première diode (D1x ; D11, ..., D1n) ou entre le deuxième interrupteur (S2x ; S21, ..., S2n) et la deuxième diode (D2x ; D21, ..., D2n) et **en ce que**, pour la commutation des modules dans le mode de fonctionnement absorbant de l'énergie, les deux interrupteurs (S1x ; S11, ..., S1n ; S2x ; S21, ..., S2n) sont ouverts.

13. Procédé selon la revendication 11, **caractérisé en ce que** tous les modules (Mx ; M1, ..., Mn) sont conçus comme des convertisseurs à deux quadrants avec inversion de tension, qui comprennent chacun une source de tension continue (Qx ; Q1, ..., Qn), dans laquelle un premier embranchement avec un branchement en série d'une première diode polarisée dans le sens bloquant (D1x ; D11, ..., D1n) et d'un premier interrupteur (S1x ; S11, ..., S1n) et un deuxième embranchement avec un branchement en série d'un deuxième interrupteur (S2x ; S21, ..., S2n) et d'une diode polarisée dans le sens bloquant (D2x ; D21, ..., D2n) sont branchés en parallèle, et les deux sorties (23, 24) des modules étant branchées chacune entre le premier interrupteur (S1x ; S11, ..., S1n) et la première diode (D1x ; D11, ..., D1n) ou entre le deuxième interrupteur (S2x ; S21, ..., S2n) et la deuxième diode (D2x ; D21, ..., D2n) et **en ce que**, dans le cadre de la coupure rapide, pour couper les modules, un des deux interrupteurs (S1x ; S11, ..., S1n ; S2x ; S21, ..., S2n) est ouvert et, pour commuter les modules dans le mode de fonctionnement absorbant de l'énergie, les deux interrupteurs (S1x ; S11, ..., S1n ; S2x ; S21, ..., S2n) sont ouverts.
